**Europäisches Patentamt**

**European Patent Office**

**Office européen des brevets**

(19)

(11) Veröffentlichungsnummer: **0 103 906**
**B1**

(12)    **EUROPÄISCHE PATENTSCHRIFT**

(45) Veröffentlichungstag der Patentschrift:
19.06.85

(51) Int. Cl.⁴: **F 04 B 21/04, F 16 J 1/12**

(21) Anmeldenummer: **83110152.2**

(22) Anmeldetag: **03.03.83**

(60) Veröffentlichungsnummer der früheren Anmeldung
nach Art. 76 EPÜ:

(54) **Verdrängerteil einer Kolbenpumpe.**

(30) Priorität: 05.03.82 **DE 3208037**
             18.02.83 **DE 3305647**

(43) Veröffentlichungstag der Anmeldung:
**28.03.84 Patentblatt 84/13**

(45) Bekanntmachung des Hinweises auf die Patenterteilung:
**19.06.85 Patentblatt 85/25**

(84) Benannte Vertragsstaaten:
**AT BE CH DE FR GB IT LI LU NL SE**

(56) Entgegenhaltungen:
**DE - A - 2 939 284**
**US - A - 1 411 793**
**US - A - 3 177 782**

(73) Patentinhaber: **Feldmühle Aktiengesellschaft,**
**Fritz-Vomfelde-Platz 4, D-4000 Düsseldorf 11 (DE)**

(72) Erfinder: **Wloka, Gerd, Bergstrasse 3,**
**D-7302 Ostfildern 3 (DE)**

(74) Vertreter: **Uhlmann, Hans, Dr. rer.nat., Dipl.-Chem.,**
**Gladbacher Strasse 189, D-4060 Viersen 1 (DE)**

**Beschreibung**

Die Erfindung betrifft ein Verdrängerteil einer Kolbenpumpe, insbesondere einer Hochdruckpumpe für abrasive und/oder korrosive Flüssigkeiten, bestehend aus einer Kolbenstange und einem an dieser, mittels einer lösbaren Verbindung befestigten Kolben aus gesintertem, keramischem, insbesondere oxidkeramischem Material, wobei der Kolben als zylindrischer Körper mit einem Sackloch ausgeführt ist.

Pumpenkolben, insbesondere solche von Hochdruckpumpen für Waschaggregate, wie sie beispielsweise in der Landwirtschaft zum Abspritzen von Ställen oder zum Reinigen von Maschinen, wie auch im Automobilsektor zum Autoreinigen eingesetzt werden, unterliegen hohen Beanspruchungen. Die Pumpen sind dabei im allgemeinen als Kolbenpumpen ausgeführt, bei denen 2 bis 6 Zylinder auf einer Kurbelwelle arbeiten. Sie erreichen Drücke, die zwischen 80 und 180 bar liegen. Als Reinigungsflüssigkeit werden meist scharfe Alkalien eingesetzt. Die Temperaturen der Reinigungsflüssigkeiten betragen 80 und mehr Grad C. Die bisher als Kolben eingesetzten, beschichteten oder hartverchromten Stahlhülsen wurden über eine Spannschraube mit der Kolbenstange verbunden. Alternativ zu diesen Stahlhülsen hat man entsprechende Hülsen aus gesinterter Oxidkeramik eingesetzt, die analog verbunden waren. Als Metallteil für die Kolbenstange wurde ein nichtrostendes Material, also im allgemeinen ein hochlegierter Stahl, verwandt.

Unter keramischen Materialien im Sinne der vorliegenden Anmeldung sollen Sinterkörper aus gesinterten Nitriden, beispielsweise Siliziumnitrid, Boriden, Titanaten, insbesondere jedoch oxidkeramischen Materialien, verstanden werden, wie sie als Aluminiumoxidkeramik und Zirkonoxidkeramik am bekanntesten sind.

Alle diese Materialien werden zunächst zu sogenannten Grünkörpern geformt, d. h. unter Zusatz bestimmter Bindemittel als Rohling gepreßt. Bei dem Sintervorgang schrumpfen diese Grünkörper erheblich. Aluminiumoxid beispielsweise bei Temperaturen oberhalb 1500°C gesintert, schwindet im Bereich von 18 bis 23%. Diese Schrumpfung ist in Abhängigkeit von der Gestalt der zu sinternden Materialien nicht überall völlig gleichmäßig, insbesondere dann nicht, wenn unterschiedliche Wandstärken vorhanden sind. Aus diesem Grunde ist es praktisch unmöglich, beispielsweise ein exakt passendes Gewinde für eine Maschinenschraube in einen Oxidsinterkörper direkt einzusintern. Man muß daher so vorgehen, daß das erforderliche Gewinde nachträglich durch Einschleifen mit diamantbestückten Schleifkörpern eingebracht bzw. nachbearbeitet wird. Ein solch aufwendiges Verfahren ist jedoch für einfache Körper, wie ihn ein Pumpenkolben darstellt, aus Preisgründen nicht realisierbar.

Der Stand der Technik sah daher vor, Rohre aus Keramik zu sintern, die an beiden Stirnseiten geschliffen wurden und mittels eines Bolzens auf die Kolbenstange aufgeschraubt werden konnten. Der Nachteil dieser Konstruktion bestand in der komplizierten Abdichtung, ohne die ein Lösen des Kolbens nicht möglich ist, da bei Eintreten von zu pumpender Flüssigkeit in dem Bereich der Verschraubung dieser Bereich korrodierte und damit unlösbar wurde.

Mit dem Einsatz einer Keramikhülse als Kolben konnte bereits weitgehend die Anforderung an die Verschleißfestigkeit und chemische Beständigkeit des Kolbens sowie Lebensdauer der Manschette berücksichtigt werden. Schwierigkeiten ergaben sich jedoch durch die Befestigung dieser Keramikhülse auf der Kolbenstange. In vielen Fällen korrodierte die Schraube oder vertrug sich nicht mit dem Fördermedium, in das sie eintaucht. In allen Fällen war es erforderlich, eine Abdichtung gegenüber der Keramikhülse zu fertigen, die ausgesprochen aufwendig war. Nur durch einen O-Ring mit dahinter angeordnetem Führungsring und einer Kupferscheibe konnte gewährleistet werden, daß die Abdichtung über einen längeren Zeitraum Bestand hatte. Außerdem mußten beide Stirnseiten der Keramikhülse plangeschliffen werden, um ein Zerstören des Kolbens durch beim Verspannen auftretende Biegekräfte zu vermeiden. Die Anordnung des O-Rings für die Dichtung erforderte zusätzlich das Einschleifen einer Fase im Eingriffsbereich des O-Rings in das Keramikrohr, um die Gefahr des Zerquetschens des O-Ringes bei der Montage zu verhindern. Das Zerquetschen ergab eine mangelhafte Dichtung, die zur Korrosion innerhalb des Kolbens führte, oder im Saughub den Kolben durch höheren Innendruck zerstörte. Auch durch das Anbringen der Fase wurde die Gefahr, daß ein O-Ring bei schneller Montage zerquetscht wurde, nicht völlig verhindert. Da die Kolben nach einer gewissen Arbeitszeit gelöst werden müssen, um die verschlissenen Dichtmanschetten, die auf diesem Kolben gleiten, auszuwechseln, ist es absolut erforderlich, daß die Verbindung zwischen Kolben und Kolbenstange nicht korrodieren kann, d. h., vom Fördermedium völlig getrennt sein muß.

Aus der DE-A 2 939 284 ist ein Verfahren zum Herstellen von Kolben aus gesinterter Oxidkeramik bekannt, wobei der Kolben beim Pressen des Rohlings mit einem groben Innenrundgewinde versehen wird und in dieses Rundgewinde nach dem Sintern und Schleifen des Kolbens ein mit einem dünneren, groben Rundgewinde versehener Metallrohling eingekittet wird. Nach dem Abbinden des Kittes bzw. Klebers wird der aus dem Kolben hervorstehende Ansatz fertig bearbeitet und mit Gewinde versehen, so daß der Kolben zentrisch verankert werden kann.

Nachteilig bei diesem Verfahren ist, daß sich die eingeklebten Verbindungsteile durch ständig pulsierende Zugdruckwechselbelastung aus der Keramik lösen, was darauf zurückzuführen ist, daß einmal der Kleber ermüdet, ferner kann der Kleber nur begrenzt höhere Temperaturen vertragen. Des weiteren ist es möglich, daß durch unzureichendes Entfetten des Rohlings Fehler beim Einbringen des Klebers entstehen, d. h., daß keine Verklebung zwischen Keramikkolben und Rohling auftritt. Darüber hinaus kann die Verbindung bei Pumpen im Reaktorbau oder Bergwerkspumpen nicht angewendet werden, da hier die Vorspannung der Packungen und Dichtmanschetten die Scherfestigkeit von verklebten Verbindungen übersteigt.

Der Erfindung liegt daher die Aufgabe zugrunde, eine einfache Verbindung zwischen Kolben und Kolbenstange zu finden, die auch beim Einsatz in korrosiven und abrasiven Medien noch nach langer Laufzeit lösbar ist.

Diese Aufgabe wird gelöst durch die Kombination der in Anspruch 1 angegebenen Merkmale.

Die bereits durch die DE-A 2 939 284 erreichte Lösung, daß nur noch der Keramikkolben als solcher mit dem zu pumpenden Medium in Berührung kommt, wobei, wie immer üblich gewesen, der Kolben durch Manschetten im Zylinderraum abgedichtet wird, damit keine Flüssigkeit nach außen austritt, somit auch keine Flüssigkeit in den Bereich des Kolbenkopfes und damit an die Kolbenstange und ihre Verschraubung gelangen kann, wird jetzt noch durch eine einfache und sichere Befestigungsmöglichkeit des Kolbens gegenüber dem älteren Vorschlag verbessert.

Durch die Anordnung einer zylindrischen Aussenkung im Sackloch des Kolbens, die zweckmäßig geschliffen ist, wird ein Paßsitz zwischen Kolbenstange und Kolben erreicht, d. h., der Kolben ist auf der Kolbenstange zentriert.

Die Erfindung sieht vor, daß in das Sackloch eine Mutter eingebracht wird. Die Mutter ist dabei zweckmäßig durch Federringe im Sackloch arretiert, wobei das Sackloch vorteilhaft die Form eines Innenvielkants aufweist. Als Mutter kann dabei eine ganz normale Sechskantmutter eingesetzt werden, wobei dann das Sackloch in Form eines Innensechskantes ausgeführt ist. Eine besondere Genauigkeit an die Ausführung des Innenvielkantes ist dabei nicht zu stellen. Es kann sogar ein erhebliches Spiel zwischen Mutter und Innenvielkant bestehen. Wichtig ist nur, daß die Mutter in dem Sackloch gehalten wird und nicht zur Öffnung hin austreten kann. Das wird durch eine Ringnut erreicht, in die ein Federring eingesetzt werden kann, so daß die Mutter beim Anziehen des Kolbens auf der Kolbenstange gegen den Federring gedrückt wird und damit fest aufliegt. Das Einbringen der Ringnut geschieht dabei im Grünzustand des Kolbens, d. h. vor dem Sintern, weil auch hieran keine große Genauigkeitsanforderungen gestellt werden müssen. Gegenüber den bisher bekannten röhrenförmigen Kolben aus Oxidkeramik ergibt sich damit schon der bearbeitungstechnische Fortschritt, daß nur noch eine Stirnfläche geschliffen werden muß, nämlich die Stirnfläche, die an der Kolbenstange anliegt, d. h., daß mit der Verbesserung des Produktes noch zusätzlich eine Arbeitsersparnis erreicht wird.

Die Kolbenstange selbst ist mit einem Ansatz versehen, an den sich ein Gewindestutzen anschließt. Der Ansatz ist in diesem Falle ebenfalls als Passung ausgeführt und greift in die Ausnehmung des Sackloches des Kolbens ein, um die Führung zu bilden. Der Gewindestutzen wird dabei gleichzeitig in die in das Sackloch eingebrachte Mutter eingeschraubt.

Die Erfindung wird nachstehend anhand der Zeichnungen näher erläutert. Die

Fig. 1 bis 3 zeigen den Stand der Technik,

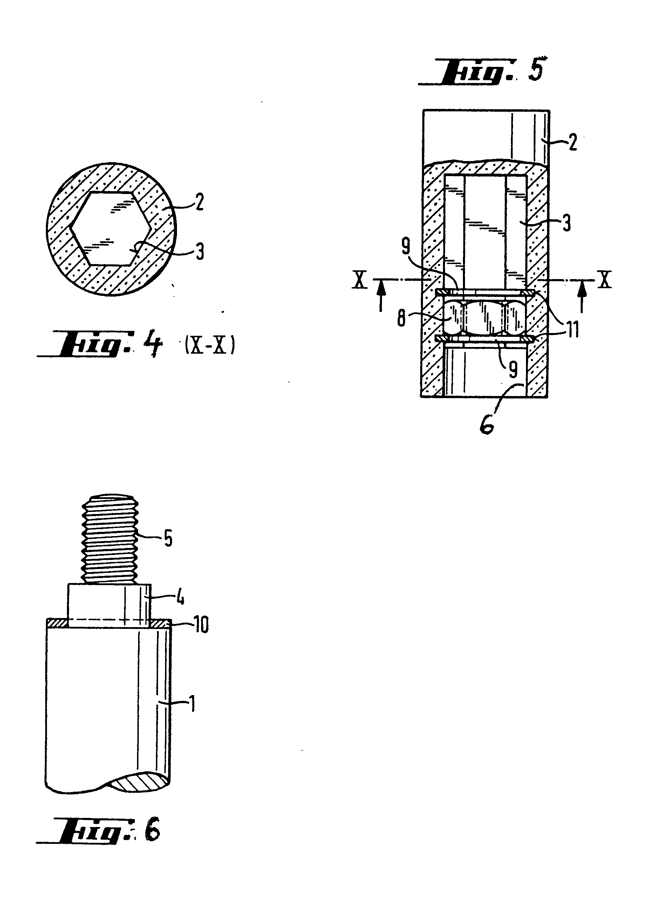

Fig. 4 einen Schnitt durch Fig. 5,
Fig. 5 einen Kolben mit eingesetzter Mutter gemäß der Erfindung,
Fig. 6 die erfindungsgemäße Kolbenstange.

Wie Fig. 6 zeigt, weist die Kolbenstange 1 einen Ansatz 4 auf, der zur Druckverteilung einen Ausgleichsring 10 trägt. Der auf dem Ansatz 4 angeordnete Gewindestutzen 5 kann in die Mutter 8 des Kolbens 2 eingeschraubt werden. Dabei übergreift die Aussenkung 6 den Ansatz 4, wodurch der Kolben 2 zentriert wird. Die Mutter 8 ist im Sackloch 3 des Kolbens 2 angeordnet, wo sie durch zwei in Ringnuten 11 gelagerte Federringe 9 gehalten wird.

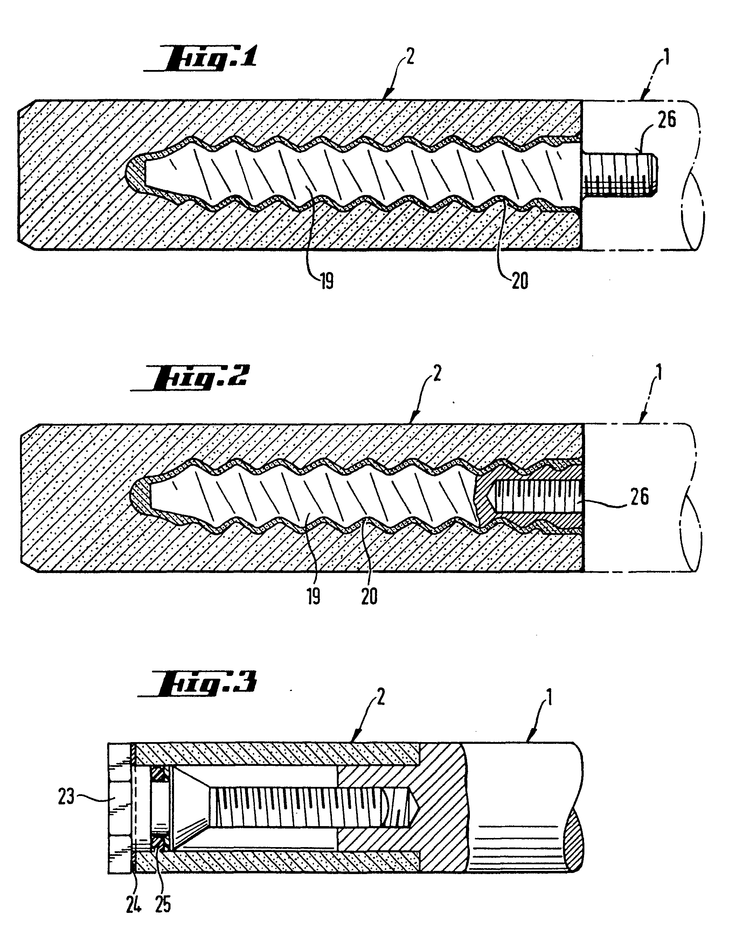

Wie in den Fig. 1 bis 3 dargestellt, unterscheidet sich der Stand der Technik erheblich vom Anmeldegegenstand. In den Fig. 1 und 2 ist in den Kolben 2 ein Rundgewindestück 19 mittels Kitt 20 eingebracht, wobei dieses Rundgewindestück 19 im Anschluß an das Einkitten mit einem Gewinde 26 zur Aufnahme der Kolbenstange 1 versehen wurde. Das Gewinde 26 kann dabei, wie Fig. 1 zeigt, als Außengewinde oder, wie Fig. 2 zeigt, als Innengewinde 26 ausgeführt sein.

Fig. 3 zeigt die Ausführung des Kolbens 2 als Kolbenhülse, die über einen Ansatz an der Kolbenstange 1 angeordnet ist und durch eine Sechskantschraube 23, die eine Ausgleichsscheibe 24 und einen O-Ring 25 trägt, mit der Kolbenstange 1 fest verbunden wird. Der O-Ring 25 dient dabei der Abdichtung des Kolbens 2, d. h. er soll das Eindringen der Förderflüssigkeit in den Innenraum des Kolbens 2 verhindern.

## Patentansprüche

1. Verdrängerteil einer Kolbenpumpe, insbesondere einer Hochdruckpumpe für abrasive und/oder korrosive Flüssigkeiten, bestehend aus einer Kolbenstange und einem an dieser mittels einer lösbaren Verbindung befestigten Kolben aus gesintertem, keramischem, insbesondere oxidkeramischem Material, wobei der Kolben als zylindrischer Körper mit einem Sackloch ausgeführt ist, gekennzeichnet durch folgende Merkmale:
das Sackloch (3) im Kolben (2) ist von einer zylindrischen Aussenkung (6) umgeben,
der an die Aussenkung (6) angrenzende Bereich des Sackloches (3) weist als Spannelement eine Mutter (8) auf,
die Mutter (8) ist mit der mit Gewinde versehenen Kolbenstange (1) verschraubt.

2. Verdrängerteil nach Anspruch 1, dadurch gekennzeichnet, daß die Mutter (8) durch mindestens einen Federring (9) in dem Sackloch (3) arretiert ist.

3. Verdrängerteil nach einem der Ansprüche 1 und 2, dadurch gekennzeichnet, daß das Sackloch (3) die Form eines Innenvielkants aufweist.

## Claims

1. Displacement part of a piston pump, especially a high pressure pump for abrasive and/or corrosive liquids, consisting of a piston rod and a piston fastened thereto by means of a detachable connection, the piston being made of sintered, ceramic, especially oxide ceramic, material and being constructed in the form of a cylindrical body with a blind hole, characterised by the following features:
the blind hole (3) in the piston (2) is surrounded by a cylindrical recess (6),
the region of the blind hole (3) bordering on the recess (6) has a nut (8) as a clamping element,
the nut (8) is joined to the piston rod (1), which is provided with a thread, by a screw connection.

2. Displacement part according to claim 1, characterised in that the nut (8) is held in the blind hole (3) by at least one spring washer (9).

3. Displacement part according to claim 1 or 2, characterised in that the blind hole (3) has the shape of a polyhedral cavity.

## Revendications

1. Pièce de refoulement d'une pompe à piston, en particulier d'une pompe haute pression pour liquides abrasifs et/ou corrosifs, comprenant une tige de piston et, fixé à celle-ci au moyen d'un raccordement amovible, un piston en matériau fritté, en céramique, en particulier en céramique oxydée, le piston étant réalisé sous la forme d'un corps cylindrique comportant un trou borgne, caractérisée par les caractéristiques suivantes:
le trou borgne (3) dans le piston (2) est entouré par la paroi extérieure d'un logement cylindrique (6),
la zone du trou borgne (3) limitrophe du logement (6) comporte un écrou (8) en tant qu'élément de serrage,
l'écrou (8) est vissé sur la tige de piston (1) munie d'un filetage.

2. Pièce de refoulement selon la revendication 1, caractérisée par le fait que l'écrou (8) est arrêté dans le trou borgne (3) par au moins un anneau élastique (9).

3. Pièce de refoulement selon l'une des revendications 1 et 2, caractérisée par le fait que le trou borgne (3) à la forme d'un polyèdre creux.

**Fig.1**

2

1

26

19

20

**Fig.2**

2

1

26

19  20

**Fig.3**

2

1

23

24  25

_Fig._ 5

_Fig._ 4 (X-X)

_Fig._ 6